# EUROPÄISCHE PATENTSCHRIFT

(11) **EP 2 454 791 B1**
(45) Veröffentlichungstag und Bekanntmachung des Hinweises auf die Patenterteilung: **15.01.2020**
(21) Anmeldenummer: 10728725.2
(22) Anmeldetag: 08.07.2010
(51) Int. Cl.: H02J 3/14, H02J 13/00

(54) **HAUSHALTSGERÄT MIT EINER KOMMUNIKATIONSEINRICHTUNG, GERÄTESYSTEM UND VERFAHREN ZUM BETREIBEN EINES HAUSHALTSGERÄTS**
DOMESTIC APPLIANCE COMPRISING A COMMUNICATION UNIT, SYSTEM OF APPLIANCES AND METHOD FOR OPERATING A DOMESTIC APPLIANCE
APPAREIL ÉLECTROMÉNAGER DOTÉ D'UN DISPOSITIF DE COMMUNICATION, SYSTÈME D'APPAREILS ET PROCÉDÉ DE FONCTIONNEMENT D'UN APPAREIL ÉLECTROMÉNAGER

(30) Priorität: 17.07.2009 DE 102009027800
(43) Veröffentlichungstag der Anmeldung: 23.05.2012
(73) Patentinhaber: BSH Hausgeräte GmbH, 81739 München (DE)
(72) Erfinder: BOSEN, Peter, 93161 Sinzing (DE); HÄPP, Claudia, 80639 München (DE)
(86) Internationale Anmeldenummer: PCT/EP2010/059807
(87) Internationale Veröffentlichungsnummer: WO 2011/006830

(56) Entgegenhaltungen:
- EP-A1- 0 456 872
- EP-A1- 1 263 108
- EP-A2- 1 018 793
- DE-A1-102004 046 758
- PALENSKY P ET AL: "Demand side management in private homes by using LonWorks", FACTORY COMMUNICATION SYSTEMS, 1997. PROCEEDINGS. 1997 IEEE INTERNATIO NAL WORKSHOP ON BARCELONA, SPAIN 1-3 OCT. 1997, NEW YORK, NY, USA,IEEE, US, 1. Oktober 1997 (1997-10-01), Seiten 341-347, XP010255516, DOI: 10.1109/WFCS.1997.634318 ISBN: 978-0-7803-4182-1

## Beschreibung

Die Erfindung betrifft ein Haushaltsgerät mit einem geräteinternen elektrischen Verbraucher, mit einer Steuereinrichtung zum Ansteuern des geräteinternen elektrischen Verbrauchers und mit einer mit der Steuereinrichtung gekoppelten Kommunikationseinrichtung, über welche die Steuereinrichtung Daten an weitere Haushaltsgeräte sendet und/oder Daten von weiteren Haushaltsgeräten empfängt. Die Erfindung bezieht sich außerdem auf ein Gerätesystem mit zumindest zwei Haushaltsgeräten sowie auf ein Verfahren zum Betreiben eines Haushaltsgeräts.

Es ist in Haushalten üblich, mehrere Haushaltsgeräte gleichzeitig laufen zu lassen, nämlich beispielsweise eine Waschmaschine, einen Geschirrspülmaschine, einen Wäschetrockner und ein Kältegerät. Durchlaufen die Haushaltsgeräte die jeweiligen Programme ohne Rücksicht auf die jeweils anderen Haushaltsgeräte, so kann eine maximal zulässige Leistungsaufnahme im Haushalt überschritten werden beziehungsweise können Lastspitzen erzeugt werden, die das elektrische Versorgungsnetz überlasten. Dies geschieht beispielsweise durch ein gleichzeitiges Einschalten von Hochleistungsverbrauchern in unterschiedlichen Haushaltsgeräten. Diese Hochleistungsverbraucher können beispielsweise eine Heizung, ein Elektromotor und ein Kompressor sein. Es ist eine besondere Herausforderung, bei gleichzeitigem Betrieb mehrerer Haushaltsgeräte die maximal zulässige Leistungsaufnahme nicht zu überschreiten beziehungsweise die Leistungsaufnahme einzelner Haushaltsgeräte derart gestalten, dass das elektrische Versorgungsnetz möglichst wenig belastet wird.

Aus der Druckschrift EP 0 727 668 A1 ist ein Gerätesystem bekannt, das eine Vielzahl von miteinander kommunizierenden Haushaltsgeräten beinhaltet; die Haushaltsgeräte kommunizieren miteinander über einen Kommunikationsbus. Eine durch die Haushaltsgeräte aufgenommene Summenleistung wird durch ein Messgerät gemessen. Das Messgerät sendet Daten über den Kommunikationsbus, die Informationen über die jeweils aktuelle Summenleistung umfassen. Jedes Haushaltsgerät kann selbige Daten an dem Kommunikationsbus abgreifen und eine eigene Leistungsaufnahme unter Berücksichtigung der in den Daten enthaltenen Informationen einstellen. Die Haushaltsgeräte vergleichen die jeweils augenblickliche Summenleistung mit einem vorbestimmten Grenzwert. Überschreitet die Summenleistung den vorbestimmten Grenzwert, so reduzieren die Haushaltsgeräte ihre eigene Leistungsaufnahme. Also wird die durch die Haushaltsgeräte aufgenommene Leistung erst dann reduziert, wenn die Summenleistung den Grenzwert bereits überschritten hat. Es können dadurch Lastspitzen im Haushalt verursacht werden, die das elektrische Versorgungsnetz überlasten.

Um dieses Problem zu umgehen, schlägt die IEEE Veröffentlichung: "Demand Side Management In Private Homes By Using Lonworks" von Palensky, Dietrich, Posta, Reiter aus 1997 vor, die Geräte ihre bereits absehbaren Leistungsaufnahmen auszutauschen und durch jedes Gerät einen Vorschlag für eine optimale Betriebsweise errechnen und schließlich auswählen zu lassen. Die zeitliche Abfolge der Lastzuschaltungen wird dabei verändert.

Es ist Aufgabe der Erfindung, eine Lösung aufzuzeigen, wie eine Vielzahl von Haushaltsgeräten in einem Haushalt besonders zuverlässig betrieben werden können. Diese Aufgabe wird erfindungsgemäß durch ein Haushaltsgerät mit den Merkmalen des Patentanspruchs 1, durch ein Gerätesystem mit den Merkmalen gemäß Patentanspruch 8, wie auch durch ein Verfahren mit den Merkmalen des Patentanspruchs 10 gelöst.

Vorteilhafte Ausführungen der Erfindung sind Gegenstand der abhängigen Ansprüche.

Ein erfindungsgemäßes Haushaltsgerät umfasst einen geräteinternen elektrischen Verbraucher. Das Haushaltsgerät umfasst außerdem eine Steuereinrichtung zum Ansteuern des geräteinternen elektrischen Verbrauchers sowie eine mit der Steuereinrichtung gekoppelte Kommunikationseinrichtung. Die Steuereinrichtung ist dazu ausgelegt, über die Kommunikationseinrichtung Daten an weitere Haushaltsgeräte zu senden und/oder Daten von weiteren Haushaltsgeräten zu empfangen.

Im Falle des Sendens ist vorgesehen, dass die Steuereinrichtung solche Daten über die Kommunikationseinrichtung sendet, die Informationen über einen Zeitpunkt einer bevorstehenden Inbetriebnahme des geräteinternen elektrischen Verbrauchers umfassen. Also kann die Steuereinrichtung andere Haushaltsgeräte über den Zeitpunkt einer geplanten Inbetriebnahme des geräteinternen elektrischen Verbrauchers informieren. Die anderen Haushaltsgeräte können hierdurch ihre Programmabläufe abhängig von dieser Information gestalten, nämlich zum Beispiel derart, dass ein gleichzeitiger Betrieb von zwei oder mehreren Hochleistungsverbrauchern vermieden wird und/oder ein vorbestimmter Grenzwert für die Gesamtleistungsaufnahme im Haushalt nicht überschritten wird und/oder eine gleichmäßige Verteilung der Leistungsaufnahme aller Haushaltsgeräte über die Zeit erzielt wird. Somit können Lastspitzen und hierdurch eine Überlastung des elektrischen Versorgungsnetzes vermieden werden. Abhängig von der Information über den Zeitpunkt der Inbetriebnahme des geräteinternen elektrischen Verbrauchers kann zum Beispiel eine Inbetriebnahme eines elektrischen Verbrauchers eines weiteren Haushaltsgerätes zeitlich vorverlegt oder aufgeschoben werden. Auf diesem Wege gelingt es, die Überschreitung eines vorbestimmten maximal zulässigen Grenzwertes für die Gesamtleistungsaufnahme tatsächlich zu vermeiden beziehungsweise die Leistungsaufnahme gleichmäßig aufzuteilen. Im Vergleich zum Gegenstand gemäß Druckschrift EP 0 727 668 A1, in welchem entsprechende Maßnahmen erst nach dem Überschreiten des vorbestimmten Grenzwerts für die Summenleistung getroffen werden, stellt die erfindungsgemäße Vorgehensweise eine signifikante Verbesserung dar. Die Programmabläufe mehrerer Haushaltsgeräte können nämlich so aufeinander zeitlich abgestimmt werden, dass der vorbestimmte Grenzwert für die Gesamtleistungsaufnahme gar nicht überschritten wird und/oder eine gleichmäßige Aufteilung der Leistungsaufnahme über der Zeit erzielt wird.

Im Falle des Empfangens ist vorgesehen, dass die Steuereinrichtung aus den empfangenen Daten Informationen über einen Zeitpunkt einer bevorstehenden Inbetriebnahme eines elektrischen Verbrauchers eines weiteren Haushaltsgerätes extrahiert und den geräteinternen elektrischen Verbraucher unter Berücksichtung dieser Informationen ansteuert. Also kann die Steuereinrichtung Informationen über den Zeitpunkt der Inbetriebnahme eines elektrischen Verbrauchers eines weiteren Haushaltsgerätes empfangen, sie verarbeiten und abhängig von dieser Information den geräteinternen elektrischen Verbraucher ansteuern. Auf diesem Wege gelingt es, den zeitlichen Ablauf des Betriebes des geräteinternen elektrischen Verbrauchers derart abhängig von der empfangenen Information zu gestalten, dass ein gleichzeitiger Betrieb von mehreren Hochleistungsverbrauchern vermieden wird oder auch ein vorbestimmter Grenzwert für die Gesamtleistungsaufnahme mehrerer Haushaltsgeräte nicht überschritten wird und/oder eine möglichst gleichmäßige Aufteilung der Leistungsaufnahme erzielt wird. Abhängig von der empfangenen Information kann das Haushaltsgerät nämlich zum Beispiel den Zeitpunkt einer Inbetriebnahme des geräteinternen elektrischen Verbrauchers vorverlegen oder aufschieben, so dass das elektrische Versorgungsnetz möglichst wenig belastet wird.

Unter einem Haushaltsgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Kaffeevollautomat oder eine Küchenmaschine. Insbesondere wird unter dem Haushaltsgerät ein solches Gerät verstanden, welches zumindest einen Hochleistungsverbraucher aufweist. Dabei kann die Definition des Hochleistungsverbrauchers je nach Anwendung unterschiedlich sein, und kann zum Beispiel einen solchen elektrischen Verbraucher bezeichnen, dessen Leistungsaufnahme beispielsweise 500 Watt überschreitet.

Die Kommunikationseinrichtung kann zum Beispiel einen Sender und/oder Empfänger umfassen, über welchen/welche Daten an einen Kommunikationsbus im Haushalt übertragen und/oder Daten an einem Kommunikationsbus abgegriffen werden können. Die Kommunikationseinrichtung kann zum drahtlosen Senden und/oder Empfangen von Daten ausgebildet sein oder sie kann zum leitungsgebundenen Senden und/oder Empfangen von Daten ausgebildet sein. Zum Beispiel kann die Kommunikationseinrichtung zum Senden und/oder Empfangen von Daten über das elektrische Versorgungsnetz beziehungsweise das Stromnetz (Power Line Communication) ausgebildet sein. Es kann auch vorgesehen sein, dass die Kommunikationseinrichtung lediglich durch einen Anschluss gebildet ist, über welchen die Steuereinrichtung an einen Kommunikationsbus angeschlossen werden kann. Dann kann die Steuereinrichtung selbst Daten gemäß einem vorbestimmten Protokoll erzeugen und/oder empfangen.

Im Falle des Sendens kann vorgesehen sein, dass die Steuereinrichtung solche Daten über die Kommunikationseinrichtung sendet, die Informationen über eine Zeitdauer eines bevorstehenden Betriebes des geräteinternen elektrischen Verbrauchers umfassen. Andere Haushaltsgeräte können dann diese Information empfangen, verarbeiten und bestimmte Vorgänge abhängig von dieser Information bewirken. Also können weitere Haushaltsgeräte Informationen sowohl über den Zeitpunkt der Inbetriebnahme des elektrischen Verbrauchers als auch über die Zeitdauer seines bevorstehenden Betriebes erhalten. Somit erhalten die weiteren Haushaltsgeräte vollständige Informationen über einen geplanten Betrieb des geräteinternen elektrischen Verbrauchers. Die weiteren Haushaltsgeräte können somit ihre Prozessabläufe derart zeitlich aufeinander abstimmen, dass die Leistungsaufnahme im Haushalt gleichmäßig aufgeteilt wird und somit das elektrische Versorgungsnetz nicht überlastet wird. Zum Beispiel können die weiteren Haushaltsgeräte mit der Inbetriebnahme ihrer Verbraucher solange warten, bis der Betrieb des geräteinternen Verbrauchers abgeschlossen ist; den Zeitpunkt dieses Abschließens können sich die weiteren Haushaltsgeräte aus den empfangenen Informationen ausrechnen.

Im Fall des Empfangens kann vorgesehen sein, dass die Steuereinrichtung aus den empfangenen Daten Informationen über eine Zeitdauer eines bevorstehenden Betriebes eines elektrischen Verbrauchers eines weiteren Haushaltsgerätes extrahiert und den geräteinternen elektrischen Verbraucher unter Berücksichtigung dieser Informationen ansteuert. Die Steuereinrichtung kann somit Informationen sowohl über den Zeitpunkt einer Inbetriebnahme eines externen elektrischen Verbrauchers als auch die Zeitdauer seines Betriebes empfangen, verarbeiten und abhängig von diesen Informationen den geräteinternen elektrischen Verbraucher ansteuern. Dies kann zum Beispiel so aussehen, dass die Steuereinrichtung eine Inbetriebnahme des geräteinternen elektrischen Verbrauchers zeitlich vorverlegt oder aufschiebt, um einen gleichzeitigen Betrieb mehrerer Verbraucher zu vermeiden und das elektrische Versorgungsnetz nicht zu überlasten. Erkennt die Steuereinrichtung zum Beispiel, dass die Inbetriebnahme des externen elektrischen Verbrauchers mit der Inbetriebnahme des geräteinternen Verbrauchers zeitlich zusammenfällt, so kann die Steuereinrichtung die Inbetriebnahme des geräteinternen Verbrauchers um die Zeitdauer des Betriebes des externen elektrischen Verbrauchers aufschieben.

Diese Ausführungsform kann zum Beispiel in einem solchen Szenario umgesetzt werden: In einem Haushalt befinden sich eine Waschmaschine sowie ein Kältegerät, die sich gleichzeitig im Betrieb befinden. Beide Geräte sind an einen Kommunikationsbus im Haushalt angeschlossen, sie können über diesen Kommunikationsbus miteinander kommunizieren. Eine Steuereinrichtung im Kältegerät erkennt, dass die Temperatur in selbigem Gerät ansteigt und ein Kompressor aktiviert werden muss. Eine Steuereinrichtung der Waschmaschine ist dabei, einen Schleuderbetrieb einzuleiten, nämlich unter Ansteuerung eines Antriebsmotors einer Wäschetrommel. Die Steuereinrichtung des Kältegeräts sendet über den Kommunikationsbus Daten mit Informationen über die bevorstehende Inbetriebnahme des Kompressors; diese Informationen umfassen den Zeitpunkt der Inbetriebnahme, wie auch die Zeitdauer des bevorstehenden Betriebes des Kompressors. Diese Daten greift die Steuereinrichtung der Waschmaschine an dem Kommunikationsbus ab. Die Steuereinrichtung der Waschmaschine kennt nun den Zeitpunkt der Inbetriebnahme sowie die Zeitdauer des bevorstehenden Betriebes des Kompressors des Kältegerätes. Die Steuereinrichtung der Waschmaschine kann somit abwarten, bis der Betrieb des Kompressors beendet wird; sie kann den Schleuderbetrieb erst dann einleiten, wenn der Betrieb des Kompressors beendet wurde.

Im Falle des Sendens kann vorgesehen sein, dass Daten über ein maximal mögliches Zeitintervall, um welches der Zeitpunkt der Inbetriebnahme des geräteinternen elektrischen Verbrauchers verschiebbar ist, in der Steuereinrichtung abgelegt sind. Dann kann die Steuereinrichtung selbige Daten über die Kommunikationseinrichtung senden. Somit können weitere Haushaltsgeräte im Haushalt darüber informiert werden, um welches Zeitintervall der Betrieb des geräteinternen elektrischen Verbrauchers zeitlich verlegt werden kann. Die weiteren Haushaltsgeräte können somit beurteilen, ob eine Verschiebung eines Betriebes eines eigenen elektrischen Verbrauchers erforderlich ist, um das elektrische Versorgungsnetz nicht zu überlasten, oder ob das Zeitintervall, um welches der Betrieb des geräteinternen Verbrauchers verschoben wird, ausreichend ist. Durch das Festlegen des maximal möglichen Zeitintervalls, um welches der Betrieb des geräteinternen elektrischen Verbrauchers zeitlich verlegt werden kann, wird erreicht, dass der geräteinterne elektrische Verbraucher seinen Betrieb abschließen kann, ohne eine zu lange Zeit abwarten zu müssen sowie das elektrische Versorgungsnetz zu überlasten. Es wird somit einerseits ein ordnungsgemäßer Betrieb des geräteinternen elektrischen Verbrauchers gewährleistet und andererseits die Erzeugung von Lastspitzen im Haushalt vermieden. Beim Festlegen der Zeitintervalle werden bevorzugt gerätespezifische Parameter berücksichtigt. Zum Beispiel muss bei einem Kältegerät die Temperatur berücksichtigt werden; das Zeitintervall kann hier nicht zu lang gewählt werden, um die Soll-Temperatur im Kältegerät aufrecht zu erhalten. Entsprechend muss bei einer Waschmaschine der Umstand berücksichtigt werden, dass ein Schleuderbetrieb oder auch ein Aufheizen von Wasser nicht beliebig aufgeschoben werden können. Die Zeitintervalle können also gerätespezifisch sowie abhängig von dem entsprechenden Verbraucher, dessen Inbetriebnahme aufgeschoben wird, vordefiniert werden.

Im Falle des Empfangens kann entsprechend vorgesehen sein, dass die Steuereinrichtung aus den empfangenen Daten Informationen über ein maximal mögliches Zeitintervall, um welches der Zeitpunkt der Inbetriebnahme eines elektrischen Verbrauchers eines weiteren Haushaltsgeräts verschiebbar ist, extrahiert und den geräteinternen elektrischen Verbraucher unter Berücksichtigung dieser Informationen ansteuert. Also kann die Steuereinrichtung Informationen darüber empfangen, um welches Zeitintervall der Betrieb weiterer im Haushalt befindlicher Verbraucher zeitlich verschoben werden kann. Diese Information ermöglicht der Steuereinrichtung eine genaue zeitliche Planung des Betriebes des geräteinternen elektrischen Verbrauchers. Anhand dieser Informationen kann die Steuereinrichtung nämlich feststellen, ob eine zeitliche Verschiebung des Betriebes des geräteinternen elektrischen Verbrauchers überhaupt erforderlich ist oder nicht. Ist das maximal mögliche Zeitintervall, um welches der Betrieb des externen Verbrauchers zeitlich verschoben werden kann, ausreichend, um das elektrische Versorgungsnetz nicht zu überlasten, so kann die Steuereinrichtung den Betrieb des geräteinternen Verbrauchers plangemäß einleiten und abschließen. Ist das maximal möglich Zeitintervall für das zeitliche Verschieben des Betriebes des externen Verbrauchers nicht ausreichend, so kann die Steuereinrichtung den Betrieb des geräteinternen Verbrauchers gegebenenfalls unterbrechen und zu einem späteren Zeitpunkt fortsetzen oder den Zeitpunkt der Inbetriebnahme des geräteinternen Verbrauchers zeitlich verschieben.

Diese Ausführungsform kann in einem solchen Ablauf umgesetzt werden: An einen Kommunikationsbus in einem Haushalt sind eine Waschmaschine sowie ein Wäschetrockner angeschlossen. Die Waschmaschine und der Wäschetrockner werden gleichzeitig in Betrieb genommen. Eine Steuereinrichtung der Waschmaschine überträgt an den Kommunikationsbus Daten, die Informationen über den Zeitpunkt des Einleitens eines Schleuderbetriebs, über die Zeitdauer des Schleuderbetriebs sowie über ein maximal mögliches Zeitintervall beinhalten, um welches der Schleuderbetrieb zeitlich verschoben werden kann. Eine Steuereinrichtung des Wäschetrockners übermittelt an den Kommunikationsbus Daten, die Informationen über den Zeitpunkt der Inbetriebnahme einer Heizung sowie über die Zeitdauer des Betriebs der Heizung beinhalten. Die Steuereinrichtung der Waschmaschine stellt fest, dass sich der Betrieb der Heizung des Wäschetrockners mit dem Schleuderbetrieb zeitlich überlappen würde, was eine Lastspitze im Haushalt verursachen würde. Sie stellt gleichzeitig fest, dass sich dies ohne viel Aufwand durch einfaches Aufschieben des Schleuderbetriebes um ein Zeitintervall kleiner als das maximal mögliche Zeitintervall vermeiden lässt. Entsprechend stellt die Steuereinrichtung des Wäschetrockners fest, dass sich der Betrieb der Heizung mit dem Schleuderbetrieb der Waschmaschine zeitlich überlappen würde und dies durch die Steuereinrichtung der Waschmaschine vermieden werden kann. Der Betrieb der Heizung kann weder vorverlegt noch aufgeschoben werden. Die Steuereinrichtung der Waschmaschine überträgt über den Kommunikationsbus weitere Daten, die Informationen darüber enthalten, dass der Schleuderbetrieb zeitlich verschoben wird. Mit diesen Daten wird die Steuereinrichtung des Wäschetrockners darüber informiert, dass mit dem Aufschieben des Schleuderbetriebs das elektrische Versorgungsnetz nicht überlastet wird und keine weiteren Sicherheitsmaßnahmen getroffen werden müssen. Die Steuereinrichtung der Waschmaschine leitet den Schleuderbetrieb unmittelbar, nachdem die Heizung des Wäschetrockners abgeschaltet wurde.

Unterschiedlichen Programmen und/oder unterschiedlichen Programmabschnitten eines bestimmten Programms können auch unterschiedliche Zeitintervalle zugeordnet sein, um welche der Zeitpunkt der Inbetriebnahme des geräteinternen elektrischen Verbrauchers verschiebbar ist. Ist der elektrische Verbraucher ein Antriebsmotor zum Antreiben einer Wäschetrommel, so können jeweils unterschiedliche Zeitintervalle für einen Waschbetrieb und einen Schleuderbetrieb vordefiniert werden. Selbst für einen Schleuderbetrieb können jeweils unterschiedliche Zeitintervalle für unterschiedliche Waschprogramme, zum Beispiel für ein "Pflege-Leicht-Programm" und ein "Kochwäsche-Programm" vordefiniert sein. Dann kann die Steuereinrichtung je nach aktuellem Programm und/oder Programmabschnitt eines bestimmten Programms solche Daten über die Kommunikationseinrichtung senden, die Informationen über ein diesem Programm oder diesem Programmabschnitt zugeordnetes maximal mögliches Zeitintervall, um welches der Zeitpunkt der Inbetriebnahme des geräteinternen Verbrauchers verschiebbar ist, umfassen.

Im Falle des Sendens kann vorgesehen sein, dass Daten über einen geschätzten oder einen tatsächlichen Leistungsverbrauch des geräteinternen elektrischen Verbrauchers in der Steuereinrichtung abgelegt sind und die Steuereinrichtung selbige Daten über die Kommunikationseinrichtung sendet. Somit kann ein weiteres im Haushalt befindliches Gerät eine Summenleistung schätzen, die durch den geräteinternen Verbraucher und das weitere Gerät aufgenommen wird. Das weitere Gerät kann somit beurteilen, ob ein Aufschieben oder Vorverlegen eines Betriebs eines elektrischen Verbrauchers erforderlich ist oder nicht. Dies kann zum Beispiel durch einen einfachen Vergleich der geschätzten Summenleistung mit einem abgelegten Grenzwert erfolgen, welcher nicht überschritten werden soll. Bei dem tatsächlichen Leistungsverbrauch des geräteinternen Verbrauchers kann es sich um eine zuvor gemessene Leistung handeln oder auch eine über mehrere Betriebe gemittelte Leistung.

Im Falle des Empfangens kann vorgesehen sein, dass die Steuereinrichtung aus den empfangenen Daten Informationen über einen Leistungsverbrauch eines elektrischen Verbrauchers eines weiteren Haushaltsgeräts extrahiert und den geräteinternen elektrischen Verbraucher unter Berücksichtigung dieser Informationen ansteuert. Dann kann die Steuereinrichtung eine Summenleistung berechnen, die durch den elektrischen Verbraucher des weiteren Haushaltsgeräts und den geräteinternen elektrischen Verbraucher zu einem bestimmten Zeitpunkt aufgenommen wird. Die Steuereinrichtung kann mit diesen Information feststellen, ob eine zeitliche Veränderung in dem Betrieb des geräteinternen elektrischen Verbrauchers erforderlich ist oder nicht. Ist die berechnete Gesamtleistung größer als ein vorbestimmter Grenzwert, so kann die Steuereinrichtung den Betrieb des geräteinternen Verbrauchers zeitlich aufteilen und/oder den Zeitpunkt der Inbetriebnahme des geräteinternen Verbrauchers verschieben.

Wie bereits ausgeführt, kann die Steuereinrichtung Daten mit Informationen über ein maximal mögliches Zeitintervall, um welches der Zeitpunkt der Inbetriebnahme des geräteinternen Verbrauchers verschiebbar ist, über die Kommunikationseinrichtung senden und/oder Daten mit Informationen über ein maximal mögliches Zeitintervall, um welches der Zeitpunkt der Inbetriebnahme eines externen elektrischen Verbrauchers verschiebbar ist, empfangen. Ein solches Zeitintervall stellt gleichsam ein Maß für eine Priorität des jeweiligen elektrischen Verbrauchers dar. Weist der elektrische Verbraucher eine hohe Priorität auf, so kann das maximal mögliche Zeitintervall entsprechend niedrig vordefiniert werden und umgekehrt. Es kann jedoch vorkommen, dass sich die Betriebe mehrerer Hochleistungsverbraucher trotz dieser vordefinierten Zeitintervalle und trotz der Verschiebung des Zeitpunktes der Inbetriebnahme der Verbraucher zeitlich überlappen. In einem solchen Fall kann entschieden werden, welcher elektrische Verbraucher Vorrang hat.

Es kann somit im Falle des Sendens vorgesehen sein, dass Daten über einen Grad einer Priorität des geräteinternen elektrischen Verbrauchers in der Steuereinrichtung abgelegt sind und die Steuereinrichtung selbige Daten über die Kommunikationseinrichtung sendet. Ein weiteres Haushaltsgerät kann somit beurteilen, ob es größere oder niedrigere Priorität aufweist und somit Vorrang hat oder nicht. Hierdurch kann ein zuverlässiger Betrieb mehrerer Haushaltsgeräte an einen Kommunikationsbus beziehungsweise in einem Haushalt gewährleistet werden. Für unterschiedliche Programme und/oder unterschiedliche Programmabschnitte eines bestimmten Programms und/oder unterschiedliche Betriebszustände des Haushaltsgeräts können jeweils unterschiedliche Grade der Priorität des geräteinternen Verbrauchers vordefiniert werden. Zum Beispiel kann ein Antriebsmotor zum Antreiben einer Wäschetrommel in einer Waschmaschine im Waschbetrieb einen geringeren Grad der Priorität als im Schleuderbetrieb aufweisen. Entsprechend kann ein Kompressor in einem Kältegerät einen niedrigeren Grad der Priorität aufweisen, wenn die Temperatur im Kältegerät stabil ist und nicht ansteigt; steigt die Temperatur an, so kann sich der Grad der Priorität des Kompressors erhöhen. Beim Festlegen der Grade der Priorität können also gerätespezifische Parameter, wie Temperatur u.ä. berücksichtigt werden.

Im Falle des Empfangens kann vorgesehen sein, dass die Steuereinrichtung aus den empfangenen Daten Informationen über einen Grad einer Priorität des elektrischen Verbrauchers des weiteren Haushaltsgeräts extrahiert und den zumindest einen elektrischen Verbraucher unter Berücksichtigung dieser Informationen ansteuert. Auf diesem Wege kann die Steuereinrichtung feststellen, welcher elektrische Verbraucher, nämlich der geräteinterne oder der externe Verbraucher, Vorrang hat. Hat der externe Verbraucher Vorrang, so kann der Betrieb des geräteinternen Verbrauchers zeitlich aufgeteilt und/oder der Zeitpunkt seiner Inbetriebnahme verschoben werden. Hat der geräteinterne Verbraucher Vorrang vor dem externen Verbraucher, so kann der geräteinterne Verbraucher plangemäß, zum Beispiel gemäß einem ausgewählten Programm, betrieben werden.

Wie bereits ausgeführt, kann die Steuereinrichtung den geräteinternen elektrischen Verbraucher unter Berücksichtigung der empfangenen Informationen ansteuern. Es ist in einer Ausführungsform vorgesehen, dass die Steuereinrichtung abhängig von den in den empfangenen Daten enthaltenen Informationen einen Zeitpunkt einer Inbetriebnahme des geräteinternen elektrischen Verbrauchers zeitlich verschiebt und/oder einen bevorstehenden Betrieb des geräteinternen elektrischen Verbrauchers zeitlich aufteilt. Erkennt die Steuereinrichtung, dass sich zum Beispiel der bevorstehende Betrieb des geräteinternen Verbrauchers mit einem Betrieb eines externen Verbrauchers zeitlich überlappen würde und dass der externe Verbraucher Vorrang hat, so kann die Steuereinrichtung den Zeitpunkt der Inbetriebnahme des geräteinternen Verbrauchers aufschieben. Somit wird eine Überlastung des elektrischen Versorgungsnetzes vermieden, und die jeweiligen Betriebe des externen und des geräteinternen Verbrauchers können ordnungsgemäß abgeschlossen werden.

Insbesondere kann die Steuereinrichtung abhängig von den in den empfangenen Daten enthaltenen Informationen den geräteinternen elektrischen Verbraucher derart ansteuern, dass eine durch das Haushaltsgerät und das weitere Haushaltsgerät aufgenommene Summenleistung einen vorbestimmten Grenzwert nicht überschreitet. Auf diesem Wege kann vermieden werden, dass zum Beispiel eine im elektrischen Versorgungsnetz vorhandene Sicherung ausgelöst wird und somit bereits begonnene Programme der Haushaltsgeräte unterbrochen werden. Die Steuereinrichtung kann den geräteinternen elektrischen Verbraucher auch derart unter Berücksichtigung der empfangenen Informationen ansteuern, dass die Leistungsaufnahme der im Haushalt befindlichen Haushaltsgeräte gleichmäßig über der Zeit aufgeteilt wird; es werden somit Schwankungen der Leistungsaufnahme im Haushalt vermieden, und das elektrische Versorgungsnetz wird wenig belastet. Also kann die Steuereinrichtung im Allgemeinen dazu ausgelegt sein, den geräteinternen Verbraucher derart abhängig von den empfangenen Informationen anzusteuern, dass eine die durch das Haushaltsgerät und das weitere Haushaltsgerät aufgenommene Summenleistung zumindest für ein vorbestimmtes Zeitintervall konstant ist.

Ein erfindungsgemäßes Gerätesystem nach Anspruch 8 umfasst zumindest ein erstes und ein zweites Haushaltsgerät, die jeweils einen geräteinternen elektrischen Verbraucher, eine Steuereinrichtung zum Ansteuern des geräteinternen elektrischen Verbrauchers und eine Kommunikationseinrichtung umfassen, über welche die Steuereinrichtung Daten an das jeweils andere Haushaltsgerät sendet und Daten von dem jeweils anderen Haushaltsgerät empfängt. Die Steuereinrichtung des ersten Haushaltsgeräts und die Steuereinrichtung des zweiten Haushaltsgeräts tauschen solche Daten miteinander aus, die Informationen über einen Zeitpunkt einer bevorstehenden Inbetriebnahme des jeweiligen geräteinternen elektrischen Verbrauchers umfassen.

Bei einem erfindungsgemäßen Verfahren nach Anspruch 10 zum Betreiben eines Haushaltsgeräts wird ein geräteinterner elektrischer Verbraucher mithilfe einer Steuereinrichtung angesteuert, die über eine Kommunikationseinrichtung Daten an weitere Haushaltsgeräte sendet und/oder Daten von weiteren Haushaltsgeräten empfängt. Im Falle des Sendens ist vorgesehen, dass die Steuereinrichtung solche Daten über die Kommunikationseinrichtung sendet, die Informationen über einen Zeitpunkt einer bevorstehenden Inbetriebnahme des geräteinternen elektrischen Verbrauchers umfassen. Im Falle des Empfangens ist vorgesehen, dass die Steuereinrichtung aus den empfangenen Daten Informationen über einen Zeitpunkt einer bevorstehenden Inbetriebnahme eines elektrischen Verbrauchers eines weiteren Haushaltsgerätes extrahiert und den geräteinternen elektrischen Verbraucher unter Berücksichtigung dieser Informationen ansteuert.

Die mit Bezug auf das erfindungsgemäße Haushaltsgerät vorgestellten bevorzugten Ausführungsformen und deren Vorteile gelten entsprechend für das erfindungsgemäße Gerätesystem und für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die beigefügten Zeichnungen näher erläutert. Es zeigen:

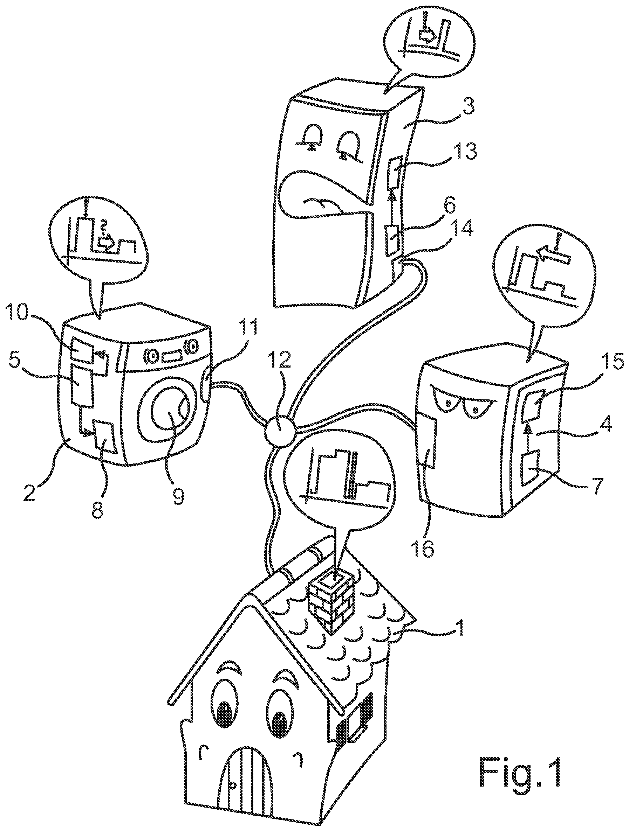

- Fig. 1: in schematischer Darstellung ein Gerätesystem gemäß einer Ausführungsform der Erfindung, umfassend eine Vielzahl von in einem Haushalt an einen Kommunikationsbus angeschlossenen Haushaltsgeräten; und
- Fig. 2a bis 2d: zu den Haushaltsgeräten gemäß Fig. 1 jeweils einen zeitlichen Verlauf der aufgenommenen Leistung sowie einen zeitlichen Verlauf einer Summenleistung, wobei anhand der Verläufe ein Verfahren gemäß einer Ausführungsform der Erfindung näher erläutert wird.

In einem Haus 1 befinden sich eine Waschmaschine 2, ein Kältegerät 3 sowie ein Wäschetrockner 4. Die Geräte 2, 3, 4 umfassen jeweils eine Steuereinrichtung 5, 6, 7, die zum Beispiel ein Mikrokontroller sein kann. Die Waschmaschine 2 umfasst als elektrische Verbraucher einen Antriebsmotor 8 zum Antreiben einer Wäschetrommel 9 sowie eine Heizung 10. Sowohl der Antriebsmotor 8 als auch die Heizung 10 werden durch die Steuereinrichtung 5 angesteuert. Die Waschmaschine 2 umfasst außerdem eine Kommunikationseinrichtung 11, über welche die Steuereinrichtung 5 Daten an einen Kommunikationsbus 12 übertragen sowie Daten von dem Kommunikationsbus 12 abgreifen kann.

Der Kommunikationsbus 12 kann zum Beispiel durch ein elektrisches Versorgungsnetz gebildet sein, und die Datenübertragung kann über dieses Versorgungsnetz erfolgen (Power Line Communication). Alternativ können die Geräte 2, 3, 4 mithilfe eines von dem elektrischen Versorgungsnetz separaten Kommunikationsbusses miteinander gekoppelt sein. Noch alternativ kann vorgesehen sein, dass die Datenübertragung zwischen den Geräten 2, 3, 4 drahtlos erfolgt.

Das Kältegerät 3 umfasst einen Kompressor 13, welcher durch die Steuereinrichtung 6 angesteuert werden kann. Das Kältegerät 3 umfasst ebenfalls eine Kommunikationseinrichtung 14, über welche die Steuereinrichtung 6 Daten an den Kommunikationsbus 12 senden und Daten empfangen kann.

Der Wäschetrockner 4 umfasst als elektrischen Verbraucher eine Heizung 15, die durch die Steuereinrichtung 7 angesteuert wird. An den Kommunikationsbus 12 ist der Wäschetrockner 4 über eine Kommunikationseinrichtung 16 angeschlossen.

In der Steuereinrichtung 5 der Waschmaschine 2 können beispielsweise folgende Daten abgelegt sein:
- Daten mit Informationen über einen Zeitpunkt der Inbetriebnahme des Antriebsmotors 8 nach dem Starten eines Waschprogramms, dies betrifft insbesondere einen Schleuderbetrieb, in welchem der Antriebsmotor 8 bei hohen Drehzahlen betrieben wird,
- Daten mit Informationen über die Zeitdauer des Betriebes des Antriebsmotors 8,
- Daten mit Informationen über ein maximal mögliches Zeitintervall Δt, um welches der Zeitpunkt der Inbetriebnahme des Antriebsmotors 8, also der Zeitpunkt eines Einleitens des Schleuderbetriebs, verschoben werden kann, nämlich vorverlegt und aufgeschoben,
- Daten mit Informationen über eine Leistungsaufnahme des Antriebsmotors 8,
- Daten mit Informationen über einen Grad der Priorität des Antriebsmotors 8.

In der Steuereinrichtung 5 der Waschmaschine 2 können beispielsweise außerdem Daten betreffend die Heizung 10 abgelegt sein:
- Daten mit Informationen über einen Zeitpunkt der Inbetriebnahme der Heizung 10 nach dem Start eines Waschprogramms,
- Daten mit Informationen über eine Zeitdauer des Betriebes der Heizung 10,
- Daten mit Informationen über ein maximal mögliches Zeitintervall Δt, um welches der Zeitpunkt der Inbetriebnahme der Heizung 10 verschoben werden kann,
- Daten mit Informationen über eine Leistungsaufnahme der Heizung 10,
- Daten mit Informationen über den Grad der Priorität der Heizung 10.

In der Steuereinrichtung 6 des Kältegeräts 3 können beispielsweise folgende Daten abgelegt sein:
- Daten mit Informationen über einen Zeitpunkt der Inbetriebnahme des Kompressors 13, vorausgesetzt, dass eine zeitliche Steuerung des Kompressors 13 vorliegt; wird der Kompressor 13 abhängig von dem jeweils aktuellen Wert der gemessenen Temperatur im Kältegerät 3 angesteuert beziehungsweise wird die Temperatur geregelt, so können die Daten über den Zeitpunkt der Inbetriebnahme des Kompressors 13 in der Steuereinrichtung 6 generiert werden,
- Daten mit Informationen über die Zeitdauer des bevorstehenden Betriebes des Kompressors 13,
- Daten mit Informationen über ein maximal mögliches Zeitintervall Δt, um welches der Zeitpunkt der Inbetriebnahme des Kompressors 13 verschoben werden kann,
- Daten mit Informationen über einen Leistungsverbrauch des Kompressors 13,
- Daten mit Informationen über den Grad der Priorität des Kompressors 13.

In der Steuereinrichtung 7 des Wäschetrockners 4 können beispielsweise folgende Daten betreffend die Heizung 15 abgelegt sein:
- Daten mit Informationen über den Zeitpunkt der Inbetriebnahme der Heizung 15 nach dem Start eines Trocknungsprogramms,
- Daten mit Informationen über die Zeitdauer des Betriebes des Heizung 15,
- Daten mit Informationen über ein maximal mögliches Zeitintervall Δt, um welches der Zeitpunkt der Inbetriebnahme der Heizung 15 verschoben werden kann,
- Daten mit Informationen über den Leistungsverbrauch der Heizung 15,
- Daten mit Informationen über den Grad der Priorität der Heizung 15.

Nachfolgend wird ein Verfahren nach Anspruch 10 gemäß einer Ausführungsform der Erfindung näher erläutert.

Alle Geräte 2, 3, 4 werden gleichzeitig betrieben. Die Geräte 2, 3, 4 übertragen die in der jeweiligen Steuereinrichtung 5, 6, 7 abgelegten Daten an den Kommunikationsbus 12. Die Steuereinrichtung 5 der Waschmaschine 2 greift somit an dem Kommunikationsbus 12 die durch die Steuereinrichtung 6 des Kältegeräts 3 sowie die durch die Steuereinrichtung 7 des Wäschetrockners 4 gesendeten Daten ab. Entsprechend empfängt die Steuereinrichtung 6 des Kältegeräts 3 diejenigen Daten, die die Steuereinrichtung 5 der Waschmaschine 2 sowie die Steuereinrichtung 7 des Wäschetrockners 4 gesendet haben. Die Steuereinrichtung 7 des Wäschetrockners 4 empfängt Daten, die die Steuereinrichtung 5 der Waschmaschine 2 und die Steuereinrichtung 6 des Kältegeräts 3 gesendet haben.

Ein Ziel für alle Geräte 2, 3, 4 ist es, einen vorbestimmten Grenzwert P_{G} für eine momentane Summenleistung P_{S}, die durch alle Geräte 2, 3, 4 aufgenommen wird, nicht zu überschreiten sowie die Summenleistung P_{S} möglichst gleichmäßig über die Zeit aufzuteilen.

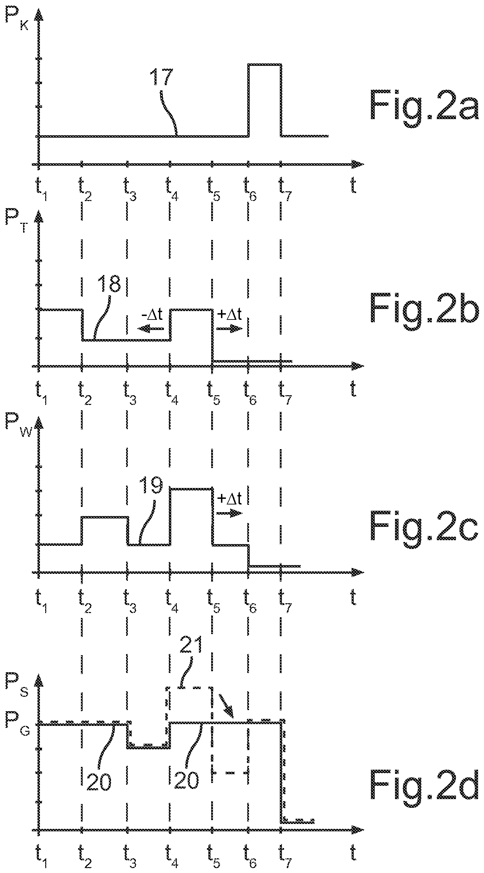

Die Fig. 2a bis 2d zeigen zeitliche Verläufe der Leistung, nämlich einen Verlauf 17 einer durch das Kältegerät 3 aufgenommenen Leistung P_{K} über der Zeit t (Fig. 2a), einen Verlauf 18 einer durch den Wäschetrockner 4 aufgenommenen Leistung P_{T} über der Zeit t (Fig. 2b), einen Verlauf 19 einer durch die Waschmaschine 2 aufgenommenen Leistung P_{W} über der Zeit t (Fig. 2c) sowie einen Verlauf 20 der durch alle Geräte 2, 3, 4 aufgenommenen Summenleistung P_{S} über der Zeit t beim Betreiben der Geräte, 2, 3, 4 gemäß dem Verfahren gemäß der Ausführungsform der Erfindung und einen Verlauf 21 der Summenleistung P_{S} über der Zeit t beim Betreiben der Geräte 2, 3, 4 gemäß dem Stand der Technik (Fig. 2d).

Aus Fig. 2a geht hervor, dass das Kältegerät 3 von einem Zeitpunkt t₁ bis zu einem Zeitpunkt t₆ relativ wenig Leistung verbrauchen soll, nämlich eine einzige Einheit der Leistung. Zu dem Zeitpunkt t₆ ist die Inbetriebnahme des Kompressors 13 vorgesehen, der Betrieb des Kompressors 13 soll bis zu einem Zeitpunkt t₇ andauern. Während des Betriebs des Kompressors 13, also in der Zeit von t₆ bis t₇ beträgt die Leistung P_{K} vier Einheiten. All diese Informationen liegen bereits in der Steuereinrichtung 5 der Waschmaschine 2, wie auch in der Steuereinrichtung 7 des Wäschetrockners 4, die bereits zum Zeitpunkt t₁ von der geplanten Inbetriebnahme des Kompressors 13 erfahren.

Aus den vom Wäschetrockner 4 gesandten Daten extrahieren die Waschmaschine 2 und das Kältegerät 3 Informationen über den bevorstehenden Verlauf 18 der Leistung P_{T}, wie er in Fig. 2b gezeigt ist. Zum Zeitpunkt t₄ soll die Heizung 15 in Betrieb genommen werden. Der Betrieb der Heizung 15 soll von t₄ bis t₅ dauern. Dieser Betrieb kann jedoch - was aus den vom Wäschetrockner 4 gesandten Daten hervorgeht - zeitlich verschoben werden; und zwar kann der Betrieb der Heizung 15 um ein Zeitintervall Δt entweder vorverlegt oder aufgeschoben werden, was in Fig. 2b mit -Δt und +Δt gezeigt ist. Da - wie aus dem Verlauf 18 hervorgeht - die Inbetriebnahme der Heizung 15 die Leistung P_{T} um eine Einheit erhöht, würde sich während der Zeit t₄ bis t₅ eine Leistungsaufnahme des Wäschetrockners 4 von einer einzigen Einheit ergeben, sollte der Betrieb der Heizung 15 zeitlich verschoben werden. All diese Informationen liegen bereits anhand der empfangenen Daten in der Steuereinrichtung 5 der Waschmaschine 2, wie auch in der Steuereinrichtung 6 des Kältegeräts 3.

Aus den von der Waschmaschine 2 gesendeten Daten können die Steuereinrichtung 6 des Kältegeräts 3 sowie die des Wäschetrockners 4 den Verlauf 19 der von der Wachmaschine 2 aufgenommenen Leistung P_{W} extrahieren, wie er in Fig. 2c dargestellt ist. Es ist vorgesehen, dass die Waschmaschine 2 vom Zeitpunkt t₁ bis zum Zeitpunkt t₂ eine einzige Einheit der Leistung P_{W} verbraucht; vom Zeitpunkt t₂ bis zum Zeitpunkt t₃ beträgt die Leistungsaufnahme der Waschmaschine 2 zwei Einheiten. Vom Zeitpunkt t₃ bis zum Zeitpunkt t₄ beträgt sie eine Einheit. Zum Zeitpunkt t₄ soll ein Schleuderbetrieb in der Waschmaschine 2 eingeleitet werden. Dazu soll der Antriebsmotor 8 bei einer hohen Drehzahl betrieben werden. Der Schleuderbetrieb soll bis zum Zeitpunkt t₅ andauern. Während des Schleuderbetriebs soll die Waschmaschine 2 insgesamt drei Einheiten der Leistung P_{W} verbrauchen. Aus den von der Steuereinrichtung 5 der Waschmaschine 2 gesandten Daten geht darüber hinaus hervor, dass der Schleuderbetrieb - wie dies in Fig. 2c mit +Δt dargestellt ist - zeitlich aufgeschoben werden kann, nämlich kann der Beginn des Schleuderbetriebs beziehungsweise die Inbetriebnahme des Antriebsmotors 8 von t₄ auf t₅ verschoben werden. Es kann somit durch die Steuereinrichtung 5 der Waschmaschine 2 veranlasst werden, dass die Waschmaschine 2 während der Zeit von t₄ bis t₅ insgesamt eine einzige Einheit der Leistung P_{W} und während der Zeit von t₅ bis t₆ insgesamt eine Leistung P_{W} von drei Einheiten verbraucht. All diese Informationen liegen in der Steuereinrichtung 6 des Kältegeräts 3 sowie in der Steuereinrichtung 7 des Wäschetrockners 4 vor.

In den Steuereinrichtungen 5, 6, 7 sind darüber hinaus Daten abgelegt, die Informationen über den Grenzwert P_{G} für die Summenleistung P_{S} beinhalten, und zwar soll die Leistungsaufnahme aller im Haushalt vorhandenen Geräte 2, 3, 4 den Grenzwert P_{G} nicht überschreiten. Gleichzeitig sollen die Geräte 2, 3, 4 ihre Prozesse ordnungsgemäß abschießen können.

Aus den empfangenen Daten berechnen die Steuereinrichtungen 5, 6, 7 die Summenleistung P_{S}, nämlich für die gesamte Zeitdauer der Prozesse der Geräte 2, 3, 4. In jeder Steuereinrichtung 5, 6, 7 ergibt sich somit ein Verlauf 21 der Summenleistung P_{S}, wie er in Fig. 2d abgebildet ist. Dieser Verlauf 21 würde sich tatsächlich dann ergeben, wenn die Geräte 2, 3, 4 ihre Prozesse ohne Rücksicht auf die jeweils anderen Geräte 2, 3, 4 durchführen würden. Die Steuereinrichtungen 5, 6, 7 stellen fest, dass die Summenleistung P_{S} während der Zeit von t₄ bis t₅ den Grenzwert P_{G} überschreiten würde, was eine Lastspitze erzeugen und das elektrische Versorgungsnetz überlasten würde. Die Steuereinrichtungen 5, 6, 7 stellen jedoch auch fest, dass dies dann vermieden werden kann, wenn zum einen die Steuereinrichtung 7 des Wäschetrockners 4 den Betrieb der Heizung von der Zeit t₄ bis t₅ auf die Zeit t₃ bis t₄ vorverlegt und zum anderen die Steuereinrichtung 5 der Waschmaschine 2 den Schleuderbetrieb von der Zeit t₄ bis t₅ auf die Zeit t₅ bis t₆ aufschiebt. Dann ergibt sich ein Verlauf 20 der Summenleistung P_{S}, wie er in Fig. 2d mit der durchgezogenen Linie dargestellt ist. Die Steuereinrichtungen 5, 6, 7 stellen nun fest, dass mit dem Verlauf 20 der Grenzwert P_{G} nicht überschritten werden würde und die Geräte 2, 3, 4 trotzdem ihre Prozesse ordnungsgemäß abschließen würden und dass es sich insgesamt eine gleichmäßige Aufteilung der Summenleistung P_{S} ergeben würde.

Also wird im Wäschetrockner 4 der Betrieb der Heizung 15 zeitlich vorverlegt, nämlich auf die Zeit von t₃ bis t₄. In der Waschmaschine 2 wird der Schleuderbetrieb zeitlich aufgeschoben, nämlich auf die Zeit t₅ bis t₆.

Insgesamt werden also ein Haushaltsgerät 2, 3, 4, ein Gerätesystem sowie ein Verfahren geschaffen, durch welche eine Entlastung des elektrischen Versorgungsnetzes ermöglicht wird, ohne die Prozesse des Haushaltsgeräts 2, 3, 4 negativ zu beeinflussen. Dem Haushaltsgerät 2, 3, 4 ist es möglich, seine Leistungsaufnahme mit gleichzeitig in Betrieb befindlichen anderen Haushaltsgeräten 2, 3, 4 zu koordinieren, um einen Grenzwert P_{G} für eine Summenleistung P_{S} nicht zu überschreiten. Dies erfolgt zum Beispiel durch dynamisches Verschieben der Betriebe der elektrischen Verbraucher 8, 10, 13, 15. Die Zeit, um welche der Betrieb zeitlich verschoben werden kann, ist dabei geräte- oder prozessabhängig definiert. Hier können zum Beispiel gerätespezifische Parameter, wie beispielsweise Temperatur berücksichtigt werden. Es handelt sich um einen automatisierten Prozess, d.h. eine Bedienperson muss nicht manuell in die jeweilige Steuerung der Haushaltsgeräte 2, 3, 4 eingreifen.

### Bezugszeichenliste

- 1: Haus
- 2: Waschmaschine
- 3: Kältegerät
- 4: Wäschetrockner
- 5, 6, 7: Steuereinrichtung
- 8: Antriebsmotor
- 9: Wäschetrommel
- 10: Heizung
- 11, 14, 16: Kommunikationseinrichtung
- 12: Kommunikationsbus
- 13: Kompressor
- 15: Heizung
- 17, 18, 19, 20, 21: Verlauf
- P_{S}: Summenleistung
- P_{G}: Grenzwert für die Summenleistung
- P_{K}, P_{T}, P_{W}: Leistungen

## Patentansprüche

1. Haushaltsgerät (2, 3, 4) mit
- einem geräteinternen elektrischen Verbraucher (8, 10, 13, 15),
- einer Steuereinrichtung (5, 6, 7) zum Ansteuern des geräteinternen elektrischen Verbrauchers (8, 10, 13, 15) und
- einer mit der Steuereinrichtung (5, 6, 7) gekoppelten Kommunikationseinrichtung (11, 14, 16), wobei die Steuereinrichtung (5, 6, 7) dazu ausgelegt ist, über die Kommunikationseinrichtung (11, 14, 16) Daten an weitere Haushaltsgeräte (2, 3, 4) zu senden,
wobei die Steuereinrichtung (5, 6, 7) dazu ausgelegt ist, solche Daten über die Kommunikationseinrichtung (11, 14, 16) zu senden, die Informationen über einen Zeitpunkt (t₁, t₂, t₄, t₆) einer bevorstehenden Inbetriebnahme des geräteinternen elektrischen Verbrauchers (8, 10, 13, 15) umfassen,
und wobei Daten über ein maximal mögliches Zeitintervall (Δt), um welches der Zeitpunkt (t₁, t₂, t₄, t₆) der Inbetriebnahme des geräteinternen elektrischen Verbrauchers (8, 10, 13, 15) verschiebbar ist, in der Steuereinrichtung (5, 6, 7) abgelegt sind und die Steuereinrichtung (5, 6, 7) dazu ausgelegt ist, selbige Daten über die Kommunikationseinrichtung (11, 14, 16) zu senden,
**dadurch gekennzeichnet, dass**
Daten in der Steuereinrichtung (5, 6, 7) abgelegt sind, durch welche unterschiedlichen Programmen des Haushaltsgeräts (2, 3, 4) und unterschiedlichen Programmabschnitten eines bestimmten Programms jeweils ein Zeitintervall (Δt) zugeordnet ist, um welches der Zeitpunkt (t₁, t₂, t₄, t₆) der Inbetriebnahme des geräteinternen elektrischen Verbrauchers (8, 10, 13, 15) in dem Programm bzw. in dem Programmabschnitt verschiebbar ist, wobei im Falle des Sendens Daten über einen Grad einer Priorität des geräteinternen elektrischen Verbrauchers (8, 10, 13, 15) in der Steuereinrichtung (5, 6, 7) abgelegt sind und die Steuereinrichtung (5, 6, 7) dazu ausgelegt ist, selbige Daten über die Kommunikationseinrichtung (11, 14, 16) zu senden, und im Falle des Empfangens die Steuereinrichtung (5, 6, 7) dazu ausgelegt ist, aus den empfangenen Daten Informationen über einen Grad einer Priorität eines elektrischen Verbrauchers (8, 10, 13, 15) eines weiteren Haushaltsgeräts (2, 3, 4) zu extrahieren und den geräteinternen elektrischen Verbraucher (8, 10, 13, 15) unter Berücksichtigung dieser Informationen anzusteuern, so dass das elektrische Versorgungsnetz möglichst wenig belastet wird.

2. Haushaltsgerät (2, 3, 4) nach Anspruch 1, **dadurch gekennzeichnet, dass** die Steuereinrichtung (5, 6, 7) dazu ausgelegt ist, über die Kommunikationseinrichtung (11, 14, 16) Daten von anderen Haushaltsgeräten (2, 3, 4) zu empfangen sowie aus den empfangenen Daten Informationen über einen Zeitpunkt (t₁, t₂, t₄, t₆) einer bevorstehenden Inbetriebnahme eines elektrischen Verbrauchers (8, 10, 13, 15) eines weiteren Haushaltsgeräts (2, 3, 4) zu extrahieren und den geräteinternen elektrischen Verbraucher (8, 10, 13, 15) unter Berücksichtigung dieser Informationen anzusteuern.

3. Haushaltsgerät (2, 3, 4) nach Anspruch 1 oder 2, **dadurch gekennzeichnet, dass**
- im Falle des Sendens die Steuereinrichtung (5, 6, 7) dazu ausgelegt ist, solche Daten über die Kommunikationseinrichtung (11, 14, 16) zu senden, die Informationen über eine Zeitdauer eines bevorstehenden Betriebes des geräteinternen elektrischen Verbrauchers (8, 10, 13, 15) umfassen,
- im Falle des Empfangens die Steuereinrichtung (5, 6, 7) dazu ausgelegt ist, aus den empfangenen Daten Informationen über eine Zeitdauer eines bevorstehenden Betriebes eines elektrischen Verbrauchers (8, 10, 13, 15) eines weiteren Haushaltsgeräts (2, 3, 4) zu extrahieren und den geräteinternen elektrischen Verbraucher (8, 10, 13, 15) unter Berücksichtigung dieser Informationen anzusteuern.

4. Haushaltsgerät (2, 3, 4) nach Anspruch 2 oder 3, **dadurch gekennzeichnet, dass** die Steuereinrichtung (5, 6, 7) dazu ausgelegt ist, aus den empfangenen Daten Informationen über ein maximal mögliches Zeitintervall (Δt), um welches der Zeitpunkt (t₁, t₂, t₄, t₆) der Inbetriebnahme des elektrischen Verbrauchers (8, 10, 13, 15) des weiteren Haushaltsgeräts (2, 3, 4) verschiebbar ist, zu extrahieren und den geräteinternen elektrischen Verbraucher (8, 10, 13, 15) unter Berücksichtigung dieser Informationen anzusteuern.

5. Haushaltsgerät (2, 3, 4) nach einem der vorhergehenden Ansprüche, **dadurch gekennzeichnet, dass**
- im Falle des Sendens Daten über einen geschätzten oder einen tatsächlichen Leistungsverbrauch (P_{K}, P_{T}, P_{W}) des geräteinternen elektrischen Verbrauchers (8, 10, 13, 15) in der Steuereinrichtung (5, 6, 7) abgelegt sind und die Steuereinrichtung (5, 6, 7) dazu ausgelegt ist, selbige Daten über die Kommunikationseinrichtung (11, 14, 16) zu senden,
- im Falle des Empfangens die Steuereinrichtung (5, 6, 7) dazu ausgelegt ist, aus den empfangenen Daten Informationen über einen Leistungsverbrauch (P_{K}, P_{T}, P_{W}) eines elektrischen Verbrauchers (8, 10, 13, 15) eines weiteren Haushaltsgeräts (2, 3, 4) zu extrahieren und den geräteinternen elektrischen Verbraucher (8, 10, 13, 15) unter Berücksichtigung dieser Informationen anzusteuern.

6. Haushaltsgerät (2, 3, 4) nach einem der vorhergehenden Ansprüche, **dadurch gekennzeichnet, dass** im Falle des Empfangens die Steuereinrichtung (5, 6, 7) dazu ausgelegt ist, abhängig von den in den empfangenen Daten enthaltenen Informationen den Zeitpunkt (t₁, t₂, t₄, t₆) einer Inbetriebnahme des geräteinternen elektrischen Verbrauchers (8, 10, 13, 15) zu verschieben und/oder einen bevorstehenden Betrieb des geräteinternen elektrischen Verbrauchers (8, 10, 13, 15) zeitlich aufzuteilen.

7. Haushaltsgerät (2, 3, 4) nach einem der vorhergehenden Ansprüche, **dadurch gekennzeichnet, dass** im Falle des Empfangens die Steuereinrichtung (5, 6, 7) dazu ausgelegt ist, abhängig von den in den empfangenen Daten enthaltenen Informationen den geräteinternen elektrischen Verbraucher (8, 10, 13, 15) derart anzusteuern, insbesondere denn Zeitpunkt (t₁, t₂, t₄, t₆) einer Inbetriebnahme des geräteinternen elektrischen Verbrauchers (8, 10, 13, 15) derart zu verschieben und/oder oder einen bevorstehenden Betrieb des geräteinternen elektrischen Verbrauchers (8, 10, 13, 15) derart zeitlich aufzuteilen, dass eine durch das Haushaltsgerät (2, 3, 4) und das weitere Haushaltsgerät (2, 3, 4) aufgenommene Summenleistung (P_{S}) einen vorbestimmten Grenzwert (P_{G}) nicht überschreitet.

8. Gerätesystem mit zumindest einem ersten und einem zweiten Haushaltsgerät (2, 3, 4), jeweils umfassend:
- einen geräteinternen elektrischen Verbraucher (8, 10, 13, 15),
- eine Steuereinrichtung (5, 6, 7) zum Ansteuern des geräteinternen elektrischen Verbrauchers (8, 10, 13, 15) und
- eine mit der Steuereinrichtung (5, 6, 7) gekoppelte Kommunikationseinrichtung (11, 14, 16), über welche die Steuereinrichtung (5, 6, 7) Daten an das jeweils andere Haushaltsgerät (2, 3, 4) sendet und Daten von dem jeweils anderen Haushaltsgerät (2, 3, 4) empfängt,
wobei die Steuereinrichtung (5, 6, 7) des ersten Haushaltsgeräts (2, 3, 4) und die Steuereinrichtung (5, 6, 7) des zweiten Haushaltsgeräts (2, 3, 4) solche Daten miteinander austauschen, die Informationen über einen Zeitpunkt (t₁, t₂, t₄, t₆) einer bevorstehenden Inbetriebnahme des jeweiligen geräteinternen elektrischen Verbrauchers (8, 10, 13, 15) umfassen,
und wobei die Steuereinrichtung (5, 6, 7) des ersten Haushaltsgeräts (2, 3, 4) und die Steuereinrichtung (5, 6, 7) des zweiten Haushaltsgeräts (2, 3, 4) solche Daten miteinander austauschen, die Informationen über ein maximal mögliches Zeitintervall (Δt), um welches der Zeitpunkt (t₁, t₂, t₄, t₆) der Inbetriebnahme des jeweiligen geräteinternen elektrischen Verbrauchers (8, 10, 13, 15) verschiebbar ist, umfassen,
**dadurch gekennzeichnet, dass**
Daten in den Steuereinrichtungen (5, 6, 7) abgelegt sind, durch welche unterschiedlichen Programmen der jeweiligen Haushaltsgeräte (2, 3, 4) und unterschiedlichen Programmabschnitten eines bestimmten Programms jeweils ein Zeitintervall (Δt) zugeordnet ist, um welches der Zeitpunkt (t₁, t₂, t₄, t₆) der Inbetriebnahme des geräteinternen elektrischen Verbrauchers (8, 10, 13, 15) in dem Programm bzw. in dem Programmabschnitt verschiebbar ist, wobei im Falle des Sendens Daten über einen Grad einer Priorität des geräteinternen elektrischen Verbrauchers (8, 10, 13, 15) in der Steuereinrichtung (5, 6, 7) abgelegt sind und die Steuereinrichtung (5, 6, 7) dazu ausgelegt ist, selbige Daten über die Kommunikationseinrichtung (11, 14, 16) zu senden, und im Falle des Empfangens die Steuereinrichtung (5, 6, 7) dazu ausgelegt ist, aus den empfangenen Daten Informationen über einen Grad einer Priorität eines elektrischen Verbrauchers (8, 10, 13, 15) eines weiteren Haushaltsgeräts (2, 3, 4) zu extrahieren und den geräteinternen elektrischen Verbraucher (8, 10, 13, 15 unter Berücksichtigung dieser Informationen anzusteuern, so dass das elektrische Versorgungsnetz möglichst wenig belastet wird.

9. Gerätesystem nach Anspruch 8, **dadurch gekennzeichnet, dass** die Steuereinrichtung (5, 6, 7) des ersten Haushaltsgeräts (2, 3, 4) und die Steuereinrichtung (5, 6, 7) des zweiten Haushaltsgeräts (2, 3, 4) solche Daten miteinander austauschen, die Informationen umfassen:
- über eine Zeitdauer des bevorstehenden Betriebes des jeweiligen geräteinternen elektrischen Verbrauchers (8, 10, 13, 15) und/oder über einen geschätzten oder einen tatsächlichen Leistungsverbrauch (P_{K}, P_{T}, P_{W}) des jeweiligen geräteinternen elektrischen Verbrauchers (8, 10, 13, 15).

10. Verfahren zum Betreiben eines Haushaltsgeräts (2, 3, 4), bei welchem ein geräteinterner elektrischer Verbraucher (8, 10, 13, 15) mithilfe einer Steuereinrichtung (5, 6, 7) angesteuert wird, die über eine Kommunikationseinrichtung (11, 14, 16) Daten an weitere Haushaltsgeräte (2, 3, 4) sendet,
wobei die Steuereinrichtung (5, 6, 7) solche Daten über die Kommunikationseinrichtung (11, 14, 16) sendet, die Informationen über einen Zeitpunkt (t₁, t₂, t₄, t₆) einer bevorstehenden Inbetriebnahme des geräteinternen elektrischen Verbrauchers (8, 10, 13, 15) umfassen,
und wobei Daten über ein maximal mögliches Zeitintervall (Δt), um welches der Zeitpunkt (t₁, t₂, t₄, t₆) der Inbetriebnahme des geräteinternen elektrischen Verbrauchers (8, 10, 13, 15) verschiebbar ist, in der Steuereinrichtung (5, 6, 7) abgelegt sind und die Steuereinrichtung (5, 6, 7) selbige Daten über die Kommunikationseinrichtung (11, 14, 16) sendet,
**dadurch gekennzeichnet, dass**
Daten in der Steuereinrichtung (5, 6, 7) abgelegt sind, durch welche unterschiedlichen Programmen des Haushaltsgeräts (2, 3, 4) und unterschiedlichen Programmabschnitten eines bestimmten Programms jeweils ein Zeitintervall (Δt) zugeordnet ist, um welches der Zeitpunkt (t₁, t₂, t₄, t₆) der Inbetriebnahme des geräteinternen elektrischen Verbrauchers (8, 10, 13, 15) in dem Programm bzw. in dem Programmabschnitt verschiebbar ist, und die Steuereinrichtung (5, 6, 7) selbige Daten über die Kommunikationseinrichtung (11, 14, 16) sendet, wobei im Falle des Sendens Daten über einen Grad einer Priorität des geräteinternen elektrischen Verbrauchers (8, 10, 13, 15) in der Steuereinrichtung (5, 6, 7) abgelegt sind und die Steuereinrichtung (5, 6, 7) selbige Daten über die Kommunikationseinrichtung (11, 14, 16) sendet, und im Falle des Empfangens die Steuereinrichtung (5, 6, 7) dazu ausgelegt ist, aus den empfangenen Daten Informationen über einen Grad einer Priorität eines elektrischen Verbrauchers (8, 10, 13, 15) eines weiteren Haushaltsgeräts (2, 3, 4) zu extrahieren, und die Steuereinrichtung den geräteinternen elektrischen Verbraucher (8, 10, 13, 15) unter Berücksichtigung dieser Informationen ansteuert, so dass das elektrische Versorgungsnetz möglichst wenig belastet wird.

11. Verfahren nach Anspruch 10, **dadurch gekennzeichnet, dass** über die Kommunikationseinrichtung (11, 14, 16) die Steuereinrichtung (5, 6, 7) Daten von weiteren Haushaltsgeräten (2, 3, 4) empfängt und die Steuereinrichtung (5, 6, 7) aus den empfangenen Daten Informationen über einen Zeitpunkt (t₁, t₂, t₄, t₆) einer bevorstehenden Inbetriebnahme eines elektrischen Verbrauchers (8, 10, 13, 15) eines weiteren Haushaltsgeräts (2, 3, 4) extrahiert und den geräteinternen elektrischen Verbraucher (8, 10, 13, 15) unter Berücksichtigung dieser Informationen ansteuert.

12. Verfahren nach Anspruch 10 oder 11, **dadurch gekennzeichnet, dass**
- im Falle des Sendens die Steuereinrichtung (5, 6, 7) solche Daten über die Kommunikationseinrichtung (11, 14, 16) sendet, die Informationen über eine Zeitdauer des bevorstehenden Betriebes des geräteinternen elektrischen Verbrauchers (8, 10, 13, 15) umfassen,
- im Falle des Empfangens die Steuereinrichtung (5, 6, 7) aus den empfangenen Daten Informationen über eine Zeitdauer eines bevorstehenden Betriebes eines elektrischen Verbrauchers (8, 10, 13, 15) eines weiteren Haushaltsgeräts (2, 3, 4) extrahiert und den geräteinternen elektrischen Verbraucher (8, 10, 13, 15) unter Berücksichtigung dieser Informationen ansteuert.

13. Verfahren nach Anspruch 11 oder 12, **dadurch gekennzeichnet, dass** die Steuereinrichtung (5, 6, 7) aus den empfangenen Daten Informationen über ein maximal mögliches Zeitintervall (Δt), um welches der Zeitpunkt (t₁, t₂, t₄, t₆) der Inbetriebnahme eines elektrischen Verbrauchers (8, 10, 13, 15) eines weiteren Haushaltsgeräts (2, 3, 4) verschiebbar ist, extrahiert und den geräteinternen elektrischen Verbraucher (8, 10, 13, 15) unter Berücksichtigung dieser Informationen ansteuert.

14. Verfahren nach einem der Ansprüche 10 bis 13, **dadurch gekennzeichnet, dass**
- im Falle des Sendens Daten über einen geschätzten oder einen tatsächlichen Leistungsverbrauch (P_{K}, P_{T}, P_{W}) des geräteinternen elektrischen Verbrauchers (8, 10, 13, 15) in der Steuereinrichtung (5, 6, 7) abgelegt sind und die Steuereinrichtung (5, 6, 7) selbige Daten über die Kommunikationseinrichtung (11, 14, 16) sendet,
- im Falle des Empfangens die Steuereinrichtung (5, 6, 7) aus den empfangenen Daten Informationen über einen Leistungsverbrauch (P_{K}, P_{T}, P_{W}) eines elektrischen Verbrauchers (8, 10, 13, 15) eines weiteren Haushaltsgeräts (2, 3, 4) extrahiert und den geräteinternen elektrischen Verbraucher (8, 10, 13, 15) unter Berücksichtigung dieser Informationen ansteuert.

## Claims

1. Household appliance (2, 3, 4) having
- an appliance-internal electrical consumer (8, 10, 13, 15),
- a control device (5, 6, 7) for actuating the appliance-internal electrical consumer (8, 10, 13, 15) and
- a communication device (11, 14, 16) coupled to the control device (5, 6, 7), wherein the control device (5, 6, 7) is designed to send data via the communication device (11, 14, 16) to further household appliances (2, 3, 4),
wherein the control device (5, 6, 7) is designed to send such data via the communication device (11, 14, 16), which comprises information about a time point (t₁, t₂, t₄, t₆) of an imminent start-up of the appliance-internal electrical consumer (8, 10, 13, 15),
and wherein data relating to a maximum possible time interval (Δt) by which the time point (t₁, t₂, t₄, t₆) of the start-up of the appliance-internal electrical consumer (8, 10, 13, 15) can be deferred is stored in the control device (5, 6, 7) and the control device (5, 6, 7) is designed to send the same data via the communication device (11, 14, 16),
**characterised in that**
data is stored in the control device (5, 6, 7), by means of which different programs of the household appliance (2, 3, 4) and different program sections of a particular program are each assigned a time interval (Δt) by which the time point (t₁, t₂, t₄, t₆) of the start-up of the appliance-internal electrical consumer (8, 10, 13, 15) can be deferred in the program or in the program section, wherein, in the send scenario, data relating to a degree of priority of the appliance-internal electrical consumer (8, 10, 13, 15) is stored in the control device (5, 6, 7) and the control device (5, 6, 7) is designed to send the same data via the communication device (11, 14, 16), and, in the receive scenario, the control device (5, 6, 7) is designed to extract from the received data information about a degree of priority of an electrical consumer (8, 10, 13, 15) of a further household appliance (2, 3, 4) and to actuate the appliance-internal electrical consumer (8, 10, 13, 15) having regard for said information, such that the load on the electrical supply network is as small as possible.

2. Household appliance (2, 3, 4) according to claim 1, **characterised in that** the control device (5, 6, 7) is designed to receive, via the communication device (11, 14, 16), data from other household appliances (2, 3, 4) and to extract from the received data information about a time point (t₁, t₂, t₄, t₆) of an imminent start-up of an electrical consumer (8, 10, 13, 15) of a further household appliance (2, 3, 4) and to actuate the appliance-internal electrical consumer (8, 10, 13, 15) having regard for said information.

3. Household appliance (2, 3, 4) according to claim 1 or 2, **characterised in that**
- in the send scenario, the control device (5, 6, 7) is designed to send such data via the communication device (11, 14, 16), which comprises information about a duration of an imminent operation of the appliance-internal electrical consumer (8, 10, 13, 15),
- in the receive scenario, the control device (5, 6, 7) is designed to extract from the received data information about a duration of an imminent operation of an electrical consumer (8, 10, 13, 15) of a further household appliance (2, 3, 4) and to actuate the appliance-internal electrical consumer (8, 10, 13, 15) having regard for said information.

4. Household appliance (2, 3, 4) according to claim 2 or 3, **characterised in that** the control device (5, 6, 7) is designed to extract from the received data information about a maximum possible time interval (Δt) by which the time point (t₁, t₂, t₄, t₆) of the start-up of the electrical consumer (8, 10, 13, 15) of the further household appliance (2, 3, 4) can be deferred, and actuates the appliance-internal electrical consumer (8, 10, 13, 15) having regard for said information.

5. Household appliance (2, 3, 4) according to one of the preceding claims, **characterised in that**
- in the send scenario, data is stored relating to an estimated or an actual power consumption (P_{K}, P_{T}, Pw) of the appliance-internal electrical consumer (8, 10, 13, 15) in the control device (5, 6, 7) and the control device (5, 6, 7) is designed to send the same data via the communication device (11, 14, 16),
- in the receive scenario, the control device (5, 6, 7) is designed to extract from the received data information about a power consumption (P_{K}, P_{T}, Pw) of an electrical consumer (8, 10, 13, 15) of a further household appliance (2, 3, 4) and to actuate the appliance-internal electrical consumer (8, 10, 13, 15) having regard for said information.

6. Household appliance (2, 3, 4) according to one of the preceding claims, **characterised in that**, in the receive scenario, the control device (5, 6, 7) is designed, as a function of the information contained in the received data, to defer the time point (t₁, t₂, t₄, t₆) of a start-up of the appliance-internal electrical consumer (8, 10, 13, 15) and/or to segment an imminent operation of the appliance-internal electrical consumer (8, 10, 13, 15) in terms of time.

7. Household appliance (2, 3, 4) according to one of the preceding claims, **characterised in that**, in the receive scenario, the control device (5, 6, 7) is designed, as a function of the information contained in the received data, to actuate the appliance-internal electrical consumer (8, 10, 13, 15) such as in particular to defer the time point (t₁, t₂, t₄, t₆) of a start-up of the appliance-internal electrical consumer (8, 10, 13, 15), and/or to segment an imminent operation of the appliance-internal electrical consumer (8, 10, 13, 15) in terms of time such that a total power (Ps) taken up by the household appliance (2, 3, 4) and the further household appliance (2, 3, 4) does not exceed a predetermined limit value (P_{G}).

8. Appliance system having at least one first and one second household appliance (2, 3, 4), each comprising
- an appliance-internal electrical consumer (8, 10, 13, 15),
- a control device (5, 6, 7) for actuating the appliance-internal electrical consumer (8, 10, 13, 15) and
- a communication device (11, 14, 16) coupled to the control device (5, 6, 7), via which the control device (5, 6, 7) sends data to the respective other household appliance (2, 3, 4) and receives data from the respective other household appliance (2, 3, 4),
wherein the control device (5, 6, 7) of the first household appliance (2, 3, 4) and the control device (5, 6, 7) of the second household appliance (2, 3, 4) exchange such data with one another, which comprises information about a time point (t₁, t₂, t₄, t₆) of an imminent start-up of the respective appliance-internal electrical consumer (8, 10, 13, 15),
and wherein the control device (5, 6, 7) of the first household appliance (2, 3, 4) and the control device (5, 6, 7) of the second household appliance (2, 3, 4) exchange such data with one another, which comprises information about a maximum possible time interval (Δt) by which the time point (t₁, t₂, t₄, t₆) of the start-up of the respective appliance-internal electrical consumer (8, 10, 13, 15) can be deferred,
**characterised in that**
data is stored in the control devices (5, 6, 7), by means of which different programs of the respective household appliances (2, 3, 4) and different program sections of a particular program are each assigned a time interval (Δt) by which the time point (t₁, t₂, t4, t₆) of the start-up of the appliance-internal electrical consumer (8, 10, 13, 15) can be deferred in the program or in the program section, wherein, in the send scenario, data relating to a degree of priority of the appliance-internal electrical consumer (8, 10, 13, 15) is stored in the control device (5, 6, 7) and the control device (5, 6, 7) is designed to send the same data via the communication device (11, 14, 16), and, in the receive scenario, the control device (5, 6, 7) is designed to extract from the received data information about a degree of priority of an electrical consumer (8, 10, 13, 15) of a further household appliance (2, 3, 4) and to actuate the appliance-internal electrical consumer (8, 10, 13, 15) having regard for said information, such that the load on the electrical supply network is as small as possible.

9. Appliance system according to claim 8, **characterised in that** the control device (5, 6, 7) of the first household appliance (2, 3, 4) and the control device (5, 6, 7) of the second household appliance (2, 3, 4) exchange such data with one another, which comprises information:
- about a duration of the imminent operation of the respective appliance-internal electrical consumer (8, 10, 13, 15) and/or
about an estimated or an actual power consumption (P_{K}, P_{T}, Pw) of the respective appliance-internal electrical consumer (8, 10 , 13, 15).

10. Method for operating a household appliance (2, 3, 4), in which an appliance-internal electrical consumer (8, 10, 13, 15) is actuated with the aid of a control device (5, 6, 7), which sends data via a communication device (11, 14, 16) to further household appliances (2, 3, 4),
wherein the control device (5, 6, 7) sends such data via the communication device (11, 14, 16), which comprises information about a time point (t₁, t₂, t₄, t₆) of an imminent start-up of the appliance-internal electrical consumer (8, 10, 13, 15),
and wherein data relating to a maximum possible time interval (Δt) by which the time point (t₁, t₂, t₄, t₆) of the start-up of the appliance-internal electrical consumer (8, 10, 13, 15) can be deferred is stored in the control device (5, 6, 7) and the control device (5, 6, 7) sends the same data via the communication device (11, 14, 16),
**characterised in that**
data is stored in the control device (5, 6, 7), by means of which different programs of the household appliance (2, 3, 4) and different program sections of a particular program are each assigned a time interval (Δt) by which the time point (t₁, t₂, t₄, t₆) of the start-up of the appliance-internal electrical consumer (8, 10, 13, 15) can be deferred in the program or in the program section, and the control device (5, 6, 7) sends the same data via the communication device (11, 14, 16), wherein, in the send scenario, data relating to a degree of priority of the appliance-internal electrical consumer (8, 10, 13, 15) is stored in the control device (5, 6, 7) and the control device (5, 6, 7) sends the same data via the communication device (11, 14, 16), and, in the receive scenario, the control device (5, 6, 7) is designed to extract from the received data information about a degree of priority of an electrical consumer (8, 10, 13, 15) of a further household appliance (2, 3, 4), and the control device actuates the appliance-internal electrical consumer (8, 10, 13, 15) having regard for said information, such that the load on the electrical supply network is as small as possible.

11. Method according to claim 10, **characterised in that**, via the communication device (11, 14, 16), the control device (5, 6, 7) receives data from further household appliances (2, 3, 4) and the control device (5, 6, 7) extracts from the received data information about a time point (t₁, t₂, t₄, t₆) of an imminent operation of an electrical consumer (8, 10, 13, 15) of a further household appliance (2, 3, 4) and actuates the appliance-internal electrical consumer (8, 10, 13, 15) having regard for said information.

12. Method according to claim 10 or 11, **characterised in that**
- in the send scenario, the control device (5, 6, 7) sends such data via the communication device (11, 14, 16), which contains information about a duration of the impending operation of the appliance-internal electrical consumer (8, 10, 13, 15),
- in the receive scenario, the control device (5, 6, 7) extracts from the received data information about a duration of an imminent operation of an electrical consumer (8, 10, 13, 15) of a further household appliance (2, 3, 4) and actuates the appliance-internal electrical consumer (8, 10, 13, 15) having regard for said information.

13. Method according to claim 11 or 12, **characterised in that** the control device (5, 6, 7) extracts from the received data information about a maximum possible time interval (Δt) by which the time point (t₁, t₂, t₄, t₆) of the start-up of an electrical consumer (8, 10, 13, 15) of a further household appliance (2, 3, 4) can be deferred, and actuates the appliance-internal electrical consumer (8, 10, 13, 15) having regard for said information.

14. Method according to one of claims 10 to 13, **characterised in that**
- in the send scenario, data relating to an estimated or an actual power consumption (P_{K}, P_{T}, Pw) of the appliance-internal electrical consumer (8, 10, 13, 15) is stored in the control device (5, 6, 7) and the control device (5, 6, 7) sends the same data via the communication device (11, 14, 16),
- in the receive scenario, the control device (5, 6, 7) extracts from the received data information about a power consumption (P_{K}, P_{T}, Pw) of an electrical consumer (8, 10, 13, 15) of a further household appliance (2, 3, 4) and actuates the appliance-internal electrical consumer (8, 10, 13, 15) having regard for said information.

## Revendications

1. Appareil ménager (2, 3, 4) comprenant
- un consommateur électrique (8, 10, 13, 15) interne à l'appareil,
- un dispositif de commande (5, 6, 7) destiné à commander le consommateur électrique (8, 10, 13, 15) interne à l'appareil, et
- un dispositif de communication (11, 14, 16) couplé au dispositif de commande (5, 6, 7), le dispositif de commande (5, 6, 7) étant conçu pour émettre des données à d'autres appareils ménagers (2, 3, 4) par l'intermédiaire du dispositif de communication (11, 14, 16),
le dispositif de commande (5, 6, 7) étant conçu pour émettre des données par l'intermédiaire du dispositif de communication (11, 14, 16), lesquelles comprennent des informations concernant un moment (t₁, t₂, t₄, t₆) d'une mise en service imminente du consommateur électrique (8, 10, 13, 15) interne à l'appareil,
et des données concernant un intervalle de temps (Δt) maximal possible, duquel le moment (t₁, t₂, t₄, t₆) de la mise en service du consommateur électrique (8, 10, 13, 15) interne à l'appareil peut être décalé, étant mémorisées dans le dispositif de commande (5, 6, 7), et le dispositif de commande (5, 6, 7) étant conçu pour émettre ces mêmes données par l'intermédiaire du dispositif de communication (11, 14, 16),
**caractérisé en ce que**
des données sont mémorisées dans le dispositif de commande (5, 6, 7), au moyen desquelles un intervalle de temps (Δt) est respectivement attribué à différents programmes de l'appareil ménager (2, 3, 4) et à différentes séquences de programme d'un programme déterminé, duquel le moment (t₁, t₂, t₄, t₆) de la mise en service du consommateur électrique (8, 10, 13, 15) interne à l'appareil peut être décalé dans le programme resp. dans la séquence de programme, des données concernant un degré d'une priorité du consommateur électrique (8, 10, 13, 15) interne à l'appareil, en cas d'émission, étant mémorisées dans le dispositif de commande (5, 6, 7), et le dispositif de commande (5, 6, 7) étant conçu pour émettre ces mêmes données par l'intermédiaire du dispositif de communication (11, 14, 16), et, en cas de réception, le dispositif de commande (5, 6, 7) étant conçu pour extraire, à partir des données reçues, des informations concernant un degré d'une priorité d'un consommateur électrique (8, 10, 13, 15) d'un autre appareil ménager (2, 3, 4) et pour commander le consommateur électrique (8, 10, 13, 15) interne à l'appareil en tenant compte de ces informations, de sorte que le réseau d'alimentation électrique soit sollicité le moins possible.

2. Appareil ménager (2, 3, 4) selon la revendication 1, **caractérisé en ce que** le dispositif de commande (5, 6, 7) est conçu pour recevoir des données d'autres appareils ménagers (2, 3, 4) par l'intermédiaire du dispositif de communication (11, 14, 16) ainsi que pour extraire, à partir des données reçues, des informations concernant un moment (t₁, t₂, t₄, t₆) d'une mise en service imminente d'un consommateur électrique (8, 10, 13, 15) d'un autre appareil ménager (2, 3, 4) et pour commander le consommateur électrique (8, 10, 13, 15) interne à l'appareil en tenant compte de ces informations.

3. Appareil ménager (2, 3, 4) selon la revendication 1 ou 2, **caractérisé en ce que**
- en cas d'émission, le dispositif de commande (5, 6, 7) est conçu pour émettre des données par l'intermédiaire du dispositif de communication (11, 14, 16), lesquelles comprennent des informations concernant une durée d'un fonctionnement imminent du consommateur électrique (8, 10, 13, 15) interne à l'appareil,
- en cas de réception, le dispositif de commande (5, 6, 7) est conçu pour extraire, à partir des données reçues, des informations concernant une durée d'un fonctionnement imminent d'un consommateur électrique (8, 10, 13, 15) d'un autre appareil ménager (2, 3, 4) et pour commander le consommateur électrique (8, 10, 13, 15) interne à l'appareil en tenant compte de ces informations.

4. Appareil ménager (2, 3, 4) selon la revendication 2 ou 3, **caractérisé en ce que** le dispositif de commande (5, 6, 7) est conçu pour extraire, à partir des données reçues, des informations concernant un intervalle de temps (Δt) maximal possible, duquel le moment (t₁, t₂, t₄, t₆) de la mise en service du consommateur électrique (8, 10, 13, 15) de l'autre appareil ménager (2, 3, 4) peut être décalé, et pour commander le consommateur électrique (8, 10, 13, 15) interne à l'appareil en tenant compte de ces informations.

5. Appareil ménager (2, 3, 4) selon l'une quelconque des revendications précédentes, **caractérisé en ce que**
- en cas d'émission, des données concernant une consommation de puissance (P_{K}, P_{T}, P_{W}) estimée ou effective du consommateur électrique (8, 10, 13, 15) interne à l'appareil sont mémorisées dans le dispositif de commande (5, 6, 7), et **en ce que** le dispositif de commande (5, 6, 7) est conçu pour émettre ces mêmes données par l'intermédiaire du dispositif de communication (11, 14, 16),
- en cas de réception, le dispositif de commande (5, 6, 7) est conçu pour extraire, à partir des données reçues, des informations concernant une consommation de puissance (P_{K}, P_{T}, P_{W}) d'un consommateur électrique (8, 10, 13, 15) d'un autre appareil ménager (2, 3, 4) et pour commander le consommateur électrique (8, 10, 13, 15) interne à l'appareil en tenant compte de ces informations.

6. Appareil ménager (2, 3, 4) selon l'une quelconque des revendications précédentes, **caractérisé en ce que**, en cas de réception, le dispositif de commande (5, 6, 7) est conçu pour décaler le moment (t₁, t₂, t₄, t₆) d'une mise en service du consommateur électrique (8, 10, 13, 15) interne à l'appareil en fonction des informations contenues dans les données reçues, et/ou pour fractionner temporellement un fonctionnement imminent du consommateur électrique (8, 10, 13, 15) interne à l'appareil.

7. Appareil ménager (2, 3, 4) selon l'une quelconque des revendications précédentes, **caractérisé en ce que**, en cas de réception, le dispositif de commande (5, 6, 7) est conçu pour commander le consommateur électrique (8, 10, 13, 15) interne à l'appareil en fonction des informations contenues dans les données reçues, notamment pour décaler le moment (t₁, t₂, t₄, t₆) d'une mise en service du consommateur électrique (8, 10, 13, 15) interne à l'appareil et/ou pour fractionner temporellement un fonctionnement imminent du consommateur électrique (8, 10, 13, 15) interne à l'appareil de manière à ce qu'une puissance totale (Ps) absorbée par l'appareil ménager (2, 3, 4) et par l'autre appareil ménager (2, 3, 4) ne dépasse pas une valeur limite (P_{G}) prédéterminée.

8. Système d'appareils comprenant au moins un premier et un deuxième appareils ménagers (2, 3, 4), comprenant respectivement :
- un consommateur électrique (8, 10, 13, 15) interne à l'appareil,
- un dispositif de commande (5, 6, 7) destiné à commander le consommateur électrique (8, 10, 13, 15) interne à l'appareil, et
- un dispositif de communication (11, 14, 16) couplé au dispositif de commande (5, 6, 7), par l'intermédiaire duquel le dispositif de commande (5, 6, 7) émet des données à l'autre appareil ménager (2, 3, 4) respectif et reçoit des données de l'autre appareil ménager (2, 3, 4) respectif,
le dispositif de commande (5, 6, 7) du premier appareil ménager (2, 3, 4) et le dispositif de commande (5, 6, 7) du deuxième appareil ménager (2, 3, 4) échangeant entre eux des données qui comprennent des informations concernant un moment (t₁, t₂, t₄, t₆) d'une mise en service imminente du consommateur électrique (8, 10, 13, 15) interne à l'appareil respectif,
et le dispositif de commande (5, 6, 7) du premier appareil ménager (2, 3, 4) et le dispositif de commande (5, 6, 7) du deuxième appareil ménager (2, 3, 4) échangeant entre eux des données qui comprennent des informations concernant un intervalle de temps (Δt) maximal possible duquel le moment (t₁, t₂, t₄, t₆) de la mise en service du consommateur électrique (8, 10, 13, 15) interne à l'appareil respectif peut être décalé,
**caractérisé en ce que**
des données sont mémorisées dans le dispositif de commande (5, 6, 7), au moyen desquelles un intervalle de temps (Δt) est respectivement attribué à différents programmes des appareils ménagers respectifs (2, 3, 4) et à différentes séquences de programme d'un programme déterminé, duquel le moment (t₁, t₂, t₄, t₆) de la mise en service du consommateur électrique (8, 10, 13, 15) interne à l'appareil peut être décalé dans le programme resp. dans la séquence de programme, des données concernant un degré d'une priorité du consommateur électrique (8, 10, 13, 15) interne à l'appareil, en cas d'émission, étant mémorisées dans le dispositif de commande (5, 6, 7), et le dispositif de commande (5, 6, 7) étant conçu pour émettre ces mêmes données par l'intermédiaire du dispositif de communication (11, 14, 16), et, en cas de réception, le dispositif de commande (5, 6, 7) étant conçu pour extraire, à partir des données reçues, des informations concernant un degré d'une priorité d'un consommateur électrique (8, 10, 13, 15) d'un autre appareil ménager (2, 3, 4) et pour commander le consommateur électrique (8, 10, 13, 15) interne à l'appareil en tenant compte de ces informations, de sorte que le réseau d'alimentation électrique soit sollicité le moins possible.

9. Système d'appareils selon la revendication 8, **caractérisé en ce que** le dispositif de commande (5, 6, 7) du premier appareil ménager (2, 3, 4) et le dispositif de commande (5, 6, 7) du deuxième appareil ménager (2, 3, 4) échangent entre eux des données qui comprennent des informations :
- concernant une durée du fonctionnement imminent du consommateur électrique (8, 10, 13, 15) interne à l'appareil respectif, et/ou
- concernant une consommation de puissance (P_{K}, P_{T}, Pw) estimée ou effective du consommateur électrique (8, 10, 13, 15) interne à l'appareil respectif.

10. Procédé de fonctionnement d'un appareil ménager (2, 3, 4), dans lequel un consommateur électrique (8, 10, 13, 15) interne à l'appareil est commandé à l'aide d'un dispositif de commande (5, 6, 7) qui émet des données à d'autres appareils ménagers (2, 3, 4) par l'intermédiaire d'un dispositif de communication (11, 14, 16),
le dispositif de commande (5, 6, 7) émettant des données par l'intermédiaire du dispositif de communication (11, 14, 16), lesquelles comprennent des informations concernant un moment (t₁, t₂, t₄, t₆) d'une mise en service imminente du consommateur électrique (8, 10, 13, 15) interne à l'appareil,
et des données concernant un intervalle de temps (Δt) maximal possible, duquel le moment (t₁, t₂, t₄, t₆) de la mise en service du consommateur électrique (8, 10, 13, 15) interne à l'appareil peut être décalé, étant mémorisées dans le dispositif de commande (5, 6, 7), et le dispositif de commande (5, 6, 7) émettant ces mêmes données par l'intermédiaire du dispositif de communication (11, 14, 16),
**caractérisé en ce que**
des données sont mémorisées dans le dispositif de commande (5, 6, 7), au moyen desquelles un intervalle de temps (Δt) est respectivement attribué à différents programmes de l'appareil ménager (2, 3, 4) et à différentes séquences de programme d'un programme déterminé, duquel le moment (t₁, t₂, t₄, t₆) de la mise en service du consommateur électrique (8, 10, 13, 15) interne à l'appareil peut être décalé dans le programme resp. dans la séquence de programme, et le dispositif de commande (5, 6, 7) émettant ces mêmes données par l'intermédiaire du dispositif de communication (11, 14, 16), des données concernant un degré d'une priorité du consommateur électrique (8, 10, 13, 15) interne à l'appareil, en cas d'émission, étant mémorisées dans le dispositif de commande (5, 6, 7), et le dispositif de commande (5, 6, 7) émettant ces mêmes données par l'intermédiaire du dispositif de communication (11, 14, 16), et, en cas de réception, le dispositif de commande (5, 6, 7) étant conçu pour extraire, à partir des données reçues, des informations concernant un degré d'une priorité d'un consommateur électrique (8, 10, 13, 15) d'un autre appareil ménager (2, 3, 4) et pour commander le consommateur électrique (8, 10, 13, 15) interne à l'appareil en tenant compte de ces informations, de sorte que le réseau d'alimentation électrique soit sollicité le moins possible.

11. Procédé selon la revendication 10, **caractérisé en ce que** le dispositif de commande (5, 6, 7) reçoit des données d'autres appareils ménagers (2, 3, 4) par l'intermédiaire du dispositif de communication (11, 14, 16) et **en ce que** le dispositif de commande (5, 6, 7), à partir des données reçues, extrait des informations concernant un moment (t₁, t₂, t₄, t₆) d'une mise en service imminente d'un consommateur électrique (8, 10, 13, 15) d'un autre appareil ménager (2, 3, 4) et commande le consommateur électrique (8, 10, 13, 15) interne à l'appareil en tenant compte de ces informations.

12. Procédé selon la revendication 10 ou 11, **caractérisé en ce que**
- en cas d'émission, le dispositif de commande (5, 6, 7) émet des données par l'intermédiaire du dispositif de communication (11, 14, 16), lesquelles comprennent des informations concernant une durée du fonctionnement imminent du consommateur électrique (8, 10, 13, 15) interne à l'appareil,
- en cas de réception, le dispositif de commande (5, 6, 7) extrait, à partir des données reçues, des informations concernant une durée d'un fonctionnement imminent d'un consommateur électrique (8, 10, 13, 15) d'un autre appareil ménager (2, 3, 4) et commande le consommateur électrique (8, 10, 13, 15) interne à l'appareil en tenant compte de ces informations.

13. Procédé selon la revendication 11 ou 12, **caractérisé en ce que** le dispositif de commande (5, 6, 7) extrait, à partir des données reçues, des informations concernant un intervalle de temps (Δt) maximal possible, duquel le moment (t₁, t₂, t₄, t₆) de la mise en service d'un consommateur électrique (8, 10, 13, 15) d'un autre appareil ménager (2, 3, 4) peut être décalé, et commande le consommateur électrique (8, 10, 13, 15) interne à l'appareil en tenant compte de ces informations.

14. Procédé selon l'une quelconque des revendications 10 à 13, **caractérisé en ce que**
- en cas d'émission, des données concernant une consommation de puissance (P_{K}, P_{T}, P_{W}) estimée ou effective du consommateur électrique (8, 10, 13, 15) interne à l'appareil sont mémorisées dans le dispositif de commande (5, 6, 7), et **en ce que** le dispositif de commande (5, 6, 7) émet ces mêmes données par l'intermédiaire du dispositif de communication (11, 14, 16),
- en cas de réception, le dispositif de commande (5, 6, 7) extrait, à partir des données reçues, des informations concernant une consommation de puissance (P_{K}, P_{T}, P_{W}) d'un consommateur électrique (8, 10, 13, 15) d'un autre appareil ménager (2, 3, 4) et commande le consommateur électrique (8, 10, 13, 15) interne à l'appareil en tenant compte de ces informations.
